# EUROPEAN PATENT APPLICATION

(11) **EP 4 586 130 A1**
(43) Date of publication of application: **16.07.2025**
(21) Application number: 23870234.4
(22) Date of filing: 06.09.2023
(51) Int. Cl.: G06F 40/166, G06F 8/33

(54) **TEXT CODE EDITING METHOD AND SYSTEM**

(30) Priority: 29.09.2022 CN 202211204858
(71) Applicant: Huawei Technologies Co., Ltd., Shenzhen, Guangdong 518129 (CN)
(72) Inventor: YUAN, Hanchen, Shenzhen, Guangdong 518129 (CN)
(74) Representative: Maiwald GmbH
(86) International application number: PCT/CN2023/117325
(87) International publication number: WO 2024/066995

(57) **Abstract**

This application provides a text code editing method and system, which are applied to the field of computer technologies. The method includes: receiving a first operation instruction of a user, where the first operation instruction instructs to replace a first code block in a first editing area with a second code block, and the second code block is one of alternative code blocks used to replace the first code block; updating, based on the first operation instruction, a first text data structure corresponding to the first editing area, where an updated first text data structure does not include a first sub-text data structure that indicates the first code block, and the updated first text data structure includes a second sub-text data structure that indicates the second code block; and displaying the second code block in the first editing area based on the updated first text data structure. This application can improve editing efficiency.

## Description

### CROSS-REFERENCE TO RELATED APPLICATIONS

This application claims priority to Chinese Patent Application No. 202211204858.0, filed with the China National Intellectual Property Administration on September 29, 2022 and entitled "TEXT CODE EDITING METHOD AND SYSTEM", which is incorporated herein by reference in its entirety.

### TECHNICAL FIELD

Embodiments of this application relate to the field of computer technologies, and in particular, to a text code editing method and system.

### BACKGROUND

An integrated development environment (integrated development environment, IDE) provides a text code editor. Software developers may edit text code in the text code editor to implement corresponding software functions.

When implementing a software function by using the text code editor, a software developer usually repeatedly modifies text code, and finally retains, in the text code editor, only one set of text code for implementing the software function. This is relatively single. If the software developer needs to replace or optimize the software function, the software developer needs to modify the set of text code again. This is inefficient.

### SUMMARY

Embodiments of this application provide a text code editing method and system, to support editing and storage of a plurality of sets of text code, so that a software developer may quickly replace code to implement software function replacement or optimization, and editing efficiency can be improved.

According to a first aspect, an embodiment of this application provides a text code editing method. The editing method may be applied to a text code editing system, and the editing system performs the following steps: receiving a first operation instruction of a user, where the first operation instruction instructs to replace a first code block in a first editing area with a second code block, and the second code block is one of alternative code blocks used to replace the first code block; updating, based on the first operation instruction, a first text data structure corresponding to the first editing area, where an updated first text data structure does not include a first sub-text data structure that indicates the first code block, and the updated first text data structure includes a second sub-text data structure that indicates the second code block; and displaying the second code block in the first editing area based on the updated first text data structure.

**In** the foregoing design, the alternative code blocks are set, so that the code block may be quickly replaced. For example, if a software developer needs to replace or optimize a software function, the software developer may use an alternative code block to replace an original code block, so that editing efficiency can be effectively improved.

**In** a possible design, before the editing system obtains the first operation instruction of the user, the second code block is displayed in a second editing area. Such a display design helps the user quickly determine or locate the alternative code block of the first code block, so that editing experience of the user can be improved. Based on this, the editing system may display the first code block in the second editing area based on the updated first text data structure.

**In** a possible design, before the first text data structure corresponding to the first editing area is updated, a second text data structure corresponding to the second editing area includes the second sub-text data structure and does not include the first sub-text data structure; and after the first text data structure corresponding to the first editing area is updated, the second text data structure corresponding to the second editing area includes the first sub-text data structure and does not include the second sub-text data structure. **In** such a design, a code block displayed in an editing area of a front-end interface is changed by changing underlying logic, that is, a text data structure, so that normal running of text code can be ensured.

**In** a possible design, there is a mapping relationship between the first sub-text data structure and a text data structure that indicates an alternative code block of the first code block; and the updating, based on the first operation instruction, a first text data structure corresponding to the first editing area includes: determining the first sub-text data structure and the second sub-text data structure based on the first operation instruction; and replacing the first sub-text data structure in the first text data structure with the second sub-text data structure based on a mapping relationship between the first sub-text data structure and the second sub-text data structure. Such a design facilitates quick replacement of a sub-text data structure in a text data structure.

In a possible design, the editing system may receive a second operation instruction of the user, where the second operation instruction indicates one or more of the following: deleting a specified code block in the first editing area, copying a specified code block in the first editing area, pasting a copied code block to a specified position in the first editing area, moving a specified code block in the first editing area to a specified position in the first editing area, or adding a code block in the first editing area. The editing system updates the first text data structure based on the second operation instruction; and further displays, in the first editing area based on the first text data structure, a code block corresponding to an updated first text data structure. In such a design, text code in a code file is divided into a plurality of code blocks, so that the user can perform an editing operation on a whole code block, thereby improving editing efficiency.

In a possible design, before obtaining the first operation instruction of the user, the editing system may further determine a code block in the first editing area based on the first text data structure of the first editing area. In such a design, text code displayed in the first editing area may be divided into a plurality of code blocks.

According to a second aspect, an embodiment of this application provides a text code editing system, including: a user interaction unit, configured to receive a first operation instruction of a user, where the first operation instruction instructs to replace a first code block in a first editing area with a second code block, and the second code block is one of alternative code blocks used to replace the first code block; and a processing unit, configured to update, based on the first operation instruction, a first text data structure corresponding to the first editing area, where an updated first text data structure does not include a first sub-text data structure that indicates the first code block, and the updated first text data structure includes a second sub-text data structure that indicates the second code block. The processing unit is further configured to display the second code block in the first editing area based on the updated first text data structure.

In a possible design, before the user interaction unit receives the first operation instruction of the user, the second code block is displayed in a second editing area; and the processing unit is further configured to display the first code block in the second editing area based on the updated first text data structure.

In a possible design, before the processing unit updates the first text data structure corresponding to the first editing area, a second text data structure corresponding to the second editing area includes the second sub-text data structure and does not include the first sub-text data structure; and after the processing unit updates the first text data structure corresponding to the first editing area, the second text data structure corresponding to the second editing area includes the first sub-text data structure and does not include the second sub-text data structure.

In a possible design, there is a mapping relationship between the first sub-text data structure and a text data structure that indicates an alternative code block of the first code block; and the processing unit is specifically configured to: determine the first sub-text data structure and the second sub-text data structure based on the first operation instruction; and replace the first sub-text data structure in the first text data structure with the second sub-text data structure based on a mapping relationship between the first sub-text data structure and the second sub-text data structure.

**In** a possible design, the user interaction unit is further configured to receive a second operation instruction of the user, where the second operation instruction indicates one or more of the following: deleting a specified code block in the first editing area, copying a specified code block in the first editing area, pasting a copied code block to a specified position in the first editing area, moving a specified code block in the first editing area to a specified position in the first editing area, or adding a code block in the first editing area. The processing unit is further configured to update the first text data structure based on the second operation instruction. The processing unit is further configured to display, in the first editing area, a code block corresponding to an updated first text data structure.

In a possible design, before the user interaction unit receives the first operation instruction of the user, the processing unit is further configured to determine a code block in the first editing area based on the first text data structure of the first editing area.

According to a third aspect, an embodiment of this application provides a computing device. The computing device includes a processor and a storage. The storage is configured to store computer-executable instructions. The processor is configured to execute the computer-executable instructions stored in the storage, so that the computing device performs the method in any one of the first aspect or the possible designs of the first aspect.

According to a fourth aspect, an embodiment of this application provides a computer-readable storage medium. The computer-readable storage medium includes computer program instructions, and when the computer program instructions are run by a computer device, the computer device is enabled to perform the method in any one of the first aspect or the possible designs of the first aspect.

According to a fifth aspect, an embodiment of this application provides a computer program product. The computer program product includes instructions, and when the instructions are run by a computer device, the computer device is enabled to perform the method in any one of the first aspect or the possible designs of the first aspect.

### BRIEF DESCRIPTION OF DRAWINGS

FIG. 1 is a diagram of an architecture of a text code editing system according to an embodiment of this application;
FIG. 2 is a schematic flowchart of a text code editing method according to an embodiment of this application;
FIG. 3A is one of diagrams of text code displaying according to an embodiment of this application;
FIG. 3B is one of diagrams of text code displaying according to an embodiment of this application;
FIG. 3C is one of diagrams of text code displaying according to an embodiment of this application;
FIG. 4A is one of diagrams of a text data structure according to an embodiment of this application;
FIG. 4B is one of diagrams of a text data structure according to an embodiment of this application;
FIG. 5A is one of diagrams of a text data structure according to an embodiment of this application;
FIG. 5B is one of diagrams of a text data structure according to an embodiment of this application;
FIG. 6A is one of diagrams of text code displaying according to an embodiment of this application;
FIG. 6B is one of diagrams of text code displaying according to an embodiment of this application;
FIG. 6C is one of diagrams of text code displaying according to an embodiment of this application;
FIG. 7 is a schematic flowchart of another text code editing method according to an embodiment of this application;
FIG. 8 is one of diagrams of text code displaying according to an embodiment of this application;
FIG. 9 is one of diagrams of text code displaying according to an embodiment of this application; and
FIG. 10 is a diagram of a structure of a computing device according to an embodiment of this application.

### DESCRIPTION OF EMBODIMENTS

To make objectives, technical solutions, and advantages of embodiments of this application clearer, the following further describes embodiments of this application in detail with reference to accompanying drawings.

At least one (item) in embodiments of this application indicates one or more (items). A plurality of (items) indicates two (items) or more than two (items). The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects.

The terms "include", "have", and any variants thereof in the following descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the word "example" or "for example" is used to represent giving an example, an illustration, or a description. Any method or design scheme described as an "example" or "for example" in embodiments of this application should not be explained as being more preferred or having more advantages than another method or design scheme. To be precise, the word such as "example" or "for example" is intended to present a related concept in a specific manner.

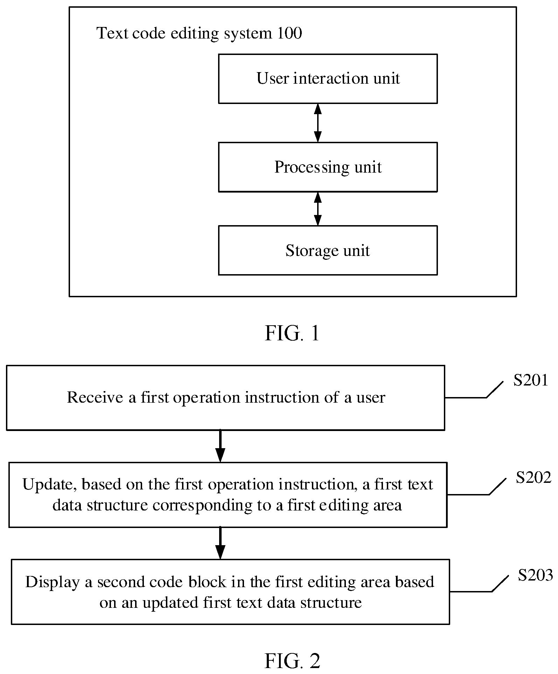

Technologies provided in embodiments of this application may be applied to a text code editing system. As shown in FIG. 1, the text code editing system 100 mainly includes a user interaction unit, a processing unit, and a storage unit. The user interaction unit interacts with a user (for example, a software developer), and provides functions of editing and displaying text code for the user. For example, the user interaction unit may provide a text code editor for the user, and the user edits text code in the text code editor, that is, the user interaction unit receives, by using the text code editor, an operation instruction of the user for editing text code. The processing unit may analyze the operation instruction, and create or update related text code in the storage unit, and a text data structure corresponding to the text code.

Specifically, text code is edited and stored by using a code file as a unit. For example, in a software function implementation scenario, one code file corresponds to one page in a software program, that is, text code in one code file is used to implement a software function of one page in the software program. The text code editor supports creation of one or more code files, and provides an independent editing area for each code file. The editing area may alternatively be described as an editing window. The user may edit text code in an editing area corresponding to a code file, and correspondingly, the text code is displayed in the editing area.

The processing unit may monitor and parse an operation performed by the user in the text code editor, and store, in the storage unit, a code file created and edited by the user in the text code editor. The processing unit may further parse text code in the code file, generate a text data structure (text struct) corresponding to the code file, and store, in the storage unit, the text data structure corresponding to the code file. A text data structure corresponding to a code file includes a plurality of nodes that indicate text code in the code file, and a connection relationship between the nodes may reflect execution (or running) logic or an execution (or running) sequence of the text code in the code file. Optionally, the text data structure may be a tree structure, and one text data structure may correspond to one or more trees. For a tree, the tree is a collection that has a hierarchical relationship and that includes a specific quantity of nodes. In a tree, a node without a parent node may be referred to as a root node. In a tree, each node other than a root node has one and only one parent node.

Optionally, a method name, a structure name, or a class name in text code indicated by a node may be stored in the node, or a node may be named as a method name, a structure name, or a class name in text code indicated by the node. For example, the node may store or be named as class, function, block, int, set, get, or the like. Optionally, the processing unit may alternatively be described as a text manager (text manager), and the node in the foregoing text data structure may alternatively be described as a data element or a text node.

The processing unit may further perform semantic analysis on text code in a code file, to determine (or identify) a code block in the code file. It may be understood that a text data structure corresponding to the code file includes a sub-text data structure that indicates any code block in a plurality of code blocks, and the sub-text data structure corresponding to the any code block includes one or more nodes.

In an example, the text code editing system provided in this embodiment of this application may be an IDE platform. The IDE platform may be established in a local operating system, and the operating system is, for example, a Windows system, or may be another operating system. The text code editor provided by the user interaction unit may be a text code editor of a front-end interface in the IDE platform. For example, the text code editor may be VSCode, IntelliJ, Sublime, or another code editor. The storage unit may occupy resources of a computer memory, or it may be understood that the storage unit belongs to a memory. Currently, a code file in the IDE platform may correspond to an editing area in the text code editor, that is, text code included in the code file may be displayed in the editing area corresponding to the code file. The software developer may modify the text code in the editing area corresponding to the code file, and finally retain only one set of text code for implementing a software function. In this way, there is only one code scheme for implementing the software function, which is relatively single. If the software developer needs to replace or optimize the software function, the software developer needs to modify the set of text code again. This is inefficient.

Based on this, an embodiment of this application provides a text code editing method. The method may be applied to the foregoing text code editing system, for example, applied to the IDE platform. In this embodiment of this application, setting an alternative code block is supported. For example, if a user needs to replace or optimize a software function, the user may use an alternative code block to replace an original code block, so that editing efficiency can be effectively improved.

With reference to FIG. 2, the following describes in detail the editing method provided in this embodiment of this application. As shown in FIG. 2, the editing method may be performed by the foregoing text code editing system (referred to as an editing system).

S201: The editing system receives a first operation instruction of a user. The first operation instruction may instruct to replace a first code block in a first editing area with a second code block. The first code block is a code block in any code file stored in the editing system, and the second code block is, for example, an alternative code block of the first code block. The alternative code block of the first code block may be used to replace the first code block, and there may be one or more alternative code blocks of the first code block. It may be understood that, when there is one alternative code block, the alternative code block of the first code block is the second code block; or when there is more than one alternative code block, the second code block is one of alternative code blocks of the first code block. In addition, a position that is of the first code block and that is in the first editing area is denoted as a first position, and the first position may be a position that is of one or more lines of text code included in the first code block and that is in the first editing area. Based on this, it may be further understood that both the first code block and the alternative code block of the first code block may be considered as candidate code blocks that can be inserted into the first position. Setting an alternative code block is equivalent to providing a plurality of sets of text code. For example, if the user (for example, a software developer) needs to replace or optimize a software function, the user may use an alternative code block to replace an original code block. This is equivalent to using one set of text code to replace another set of text code, so that optimization, modification, upgrading, or the like of the software function may be implemented.

In an optional implementation, one code file corresponds to two editing areas, for example, a first editing area and a second editing area. The first editing area displays a set of text code that is currently effective. This may alternatively be described as that the first editing area displays a set of text code to be run. The set of text code displayed in the first editing area may include a plurality of code blocks. The second editing area displays alternative code blocks of some or all code blocks in the first editing area. There may be one or more alternative code blocks for one code block. It may be understood that the alternative code block in the second editing area is not effective or not run. On the basis of the editing area for displaying effective text code, the editing area for displaying an alternative code block is further set, so that the user may quickly select a corresponding alternative code block to replace a code block, thereby implementing switching between a plurality of sets of text code.

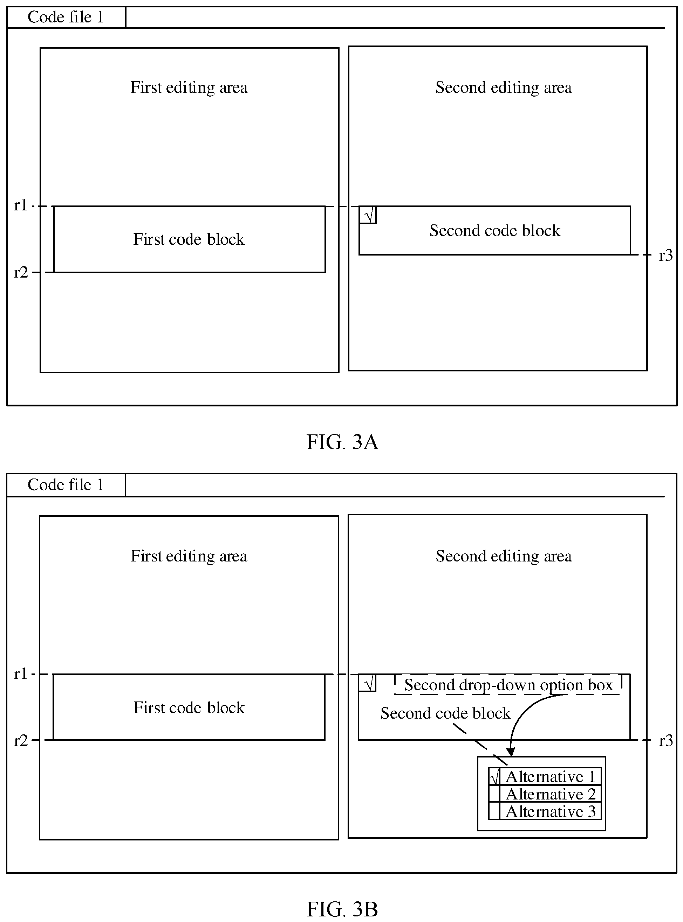

In S201, the first code block is displayed in the first editing area, and the second code block is displayed in the second editing area. For example, there is one alternative code block for the first code block. Refer to a code displaying manner shown in FIG. 3A. A first editing area and a second editing area of a code file 1 are displayed side by side, a first code block includes text code in an r1^{th} line to an r2^{th} line in the first editing area, and a second code block includes text code in an r1^{th} line to an r3^{th} line in the second editing area. Herein, r1, r2, and r3 are all positive integers, and r2 and r3 may be the same or different. It may also be understood that a start line of the second code block displayed in the second editing area is the same as a start line of the first code block displayed in the first editing area. Such a design may help the user quickly determine an alternative code block of the first code block. An optional box is set on the second code block. When the user selects the optional box, it is equivalent to entering the first operation instruction, and the editing system may receive the first operation instruction entered by the user. If the user selects the optional box, it indicates that the user expects to replace the first code block in the first encoding area with the second code block. Therefore, the first operation instruction may instruct to replace the first code block in the first encoding area with the second code block. Optionally, S201 may alternatively be described as: in response to an operation of a user, determining a first operation instruction of the user.

For another example, there are a plurality of alternative code blocks for the first code block. Refer to a code displaying manner shown in FIG. 3B. A first editing area and a second editing area of a code file 1 are displayed side by side, and a first code block includes text code in an r1^{th} line to an r2^{th} line in the first editing area. In the second editing area, a plurality of alternative code blocks of the first code block are displayed by using an r1^{th} line as a start position. Text code of one of the alternative code blocks is completely displayed in the second editing area, for example, occupies the r1^{th} line to an r3^{th} line in the second editing area. Herein, r1, r2, and r3 are all positive integers, and r2 and r3 may be the same or different. An alternative code block whose text code is completely displayed is denoted as a second code block, and a second drop-down option box is set at a position at which the second code block is located. A remaining alternative code block other than the second code block is displayed in the second drop-down option box by using identification information, and complete text code is not displayed. Identification information of an alternative code block may be a number or a name of the alternative code block, or other information that can uniquely indicate the alternative code block. This is not limited in this embodiment of this application. Such a design enables a start line of the second code block displayed in the second editing area to be the same as a start line of the first code block displayed in the first editing area, so that the user may quickly determine an alternative code block of the first code block based on a position of the first code block. Optionally, the second drop-down option box may include identification information of all alternative code blocks of the first code block, and the user is supported in selecting an alternative code block from the second drop-down option box as the second code block, which is completely displayed in the second editing area. Such a design can increase interaction with the user and improve user experience. In an example, FIG. 3B shows that the second drop-down option box includes numbers of all alternative code blocks of the first code block, for example, denoted as alternative 1, alternative 2, and alternative 3. An alternative code block indicated by alternative 1 is displayed in the second editing area as complete text code.

In addition, an optional box may be set on the second code block. When the user selects the optional box, it is equivalent to entering the first operation instruction, and the editing system may receive the first operation instruction entered by the user. If the user selects the optional box, it indicates that the user expects to replace the first code block in the first encoding area with the second code block. Therefore, the first operation instruction may instruct to replace the first code block in the first encoding area with the second code block. Optionally, S201 may alternatively be described as: in response to an operation of a user, determining a first operation instruction of the user.

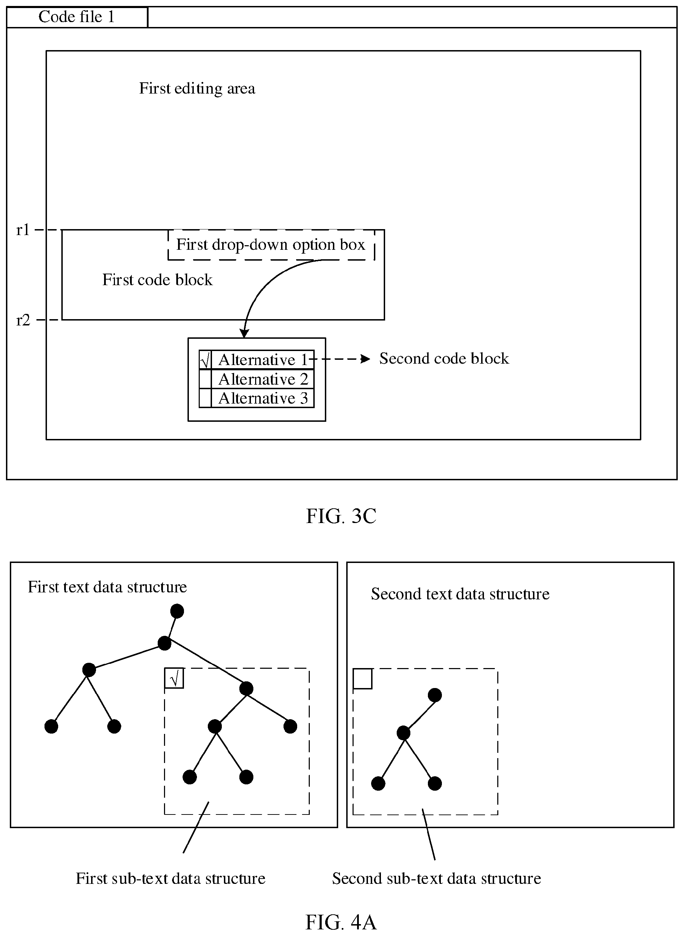

In another optional implementation, one code file corresponds to one editing area, for example, referred to as a first editing area. The first editing area displays a set of text code that is currently effective. This may alternatively be described as that the first editing area displays a set of text code to be run. The set of text code displayed in the first editing area may include a plurality of code blocks. In S201, the plurality of code blocks in the first editing area include a first code block, the editing system stores an alternative code block of the first code block, and there may be one or more alternative code blocks of the first code block. A first drop-down option box is set at a position at which the first code block is located. The first drop-down option box may include identifiers of all alternative code blocks of the first code block. An identifier of an alternative code block is, for example, a number or a name of the alternative code block, or other information that can indicate the alternative code block. This is not limited in this embodiment of this application. It may be understood that, in S201, the first code block displayed in the first editing area is an effective and runnable code block, and the alternative code block of the first code block is not displayed, and is not effective or not run. Refer to FIG. 3C. The first drop-down option box includes numbers of all alternative code blocks of the first code block, for example, alternative 1, alternative 2, and alternative 3. When the user selects one of the alternative code blocks from the first drop-down option box, it is equivalent to entering the first operation instruction, and the editing system may receive the first operation instruction entered by the user. For example, the alternative code block selected by the user is denoted as a second code block (for example, the user selects "alternative 1"). If the user selects the second code block, it indicates that the user expects to replace the first code block in the first encoding area with the second code block. Therefore, the first operation instruction may instruct to replace the first code block in the first encoding area with the second code block. Optionally, S201 may alternatively be described as: in response to an operation of a user, determining a first operation instruction of the user.

Optionally, S201 is performed by a user interaction unit in the editing system, and the user interaction unit receives the first operation instruction of the user. For example, the user interaction unit provides a text code editor for the user, and when the user triggers, in the text code editor, an editing operation of replacing the first code block in the first editing area with the second code block, the user interaction unit receives the first operation instruction of the user.

S202: The editing system updates, based on the first operation instruction, a first text data structure corresponding to the first editing area.

For example, a storage unit of the editing system may pre-store the first text data structure corresponding to the first editing area, and a connection relationship between nodes included in the first text data structure may reflect execution logic or an execution sequence of complete text code displayed in the first editing area. It may be understood that, corresponding to a plurality of code blocks in the text code displayed in the first editing area, the first text data structure may include a sub-text data structure that indicates any code block in the plurality of code blocks. Similarly, the storage unit of the editing system may further pre-store a second text data structure. The second text data structure indicates alternative code blocks of some or all code blocks in the text code displayed in the first editing area. The second text data structure may include a sub-text data structure corresponding to each alternative code block, and there is no connection relationship between sub-text data structures corresponding to different alternative code blocks. It may be understood that the second text data structure includes a plurality of independent sub-text data structures. A sub-text data structure corresponding to an alternative code block may reflect execution logic or an execution sequence of text code in the alternative code block. For example, a first code block of the complete text code is displayed in the first editing area, and alternative code blocks of the first code block include a second code block and a third code block. The second text data structure may include a second sub-text data structure that indicates the second code block, and the second text data structure includes a third sub-text data structure that indicates the third code block. The second sub-text data structure and the third sub-text data structure are independent of each other, and do not have a connection relationship.

For any code block that is in the first editing area and that has an alternative code block, there is a mapping relationship between a sub-text data structure corresponding to the code block and a sub-text data structure corresponding to each alternative code block of the code block. For example, the alternative code blocks of the first code block include the second code block and the third code block. There is a mapping relationship between a first sub-text data structure corresponding to the first code block and the second sub-text data structure corresponding to the second code block. There is a mapping relationship between the first sub-text data structure corresponding to the first code block and the third sub-text data structure corresponding to the third code block.

It is described in S201 that the first operation instruction instructs to replace the first code block in the first editing area with the second code block. After receiving the first operation instruction, the editing system may determine the first sub-text data structure corresponding to the first code block and the second sub-text data structure corresponding to the second code block. Further, the editing system may replace the first sub-text data structure in the first text data structure in the first editing area with the second sub-text data structure based on the mapping relationship between the first sub-text data structure and the second sub-text data structure. For example, there is a mapping relationship between a position of a root node in the first sub-text data structure and a position of a root node in the second sub-text data structure, and the editing system may determine, based on the mapping relationship, a position at which the second sub-text structure is to be inserted into the first text data structure. Before S202 is performed, the root node in the first sub-text data structure is located at a position 1 in the first text data structure. Therefore, when performing S202, the editing system may insert the root node in the second sub-text data structure into the position 1 in the first text data structure. Such a design can reduce interference to execution logic of the text code, and ensure normal running of the text code in the first editing area.

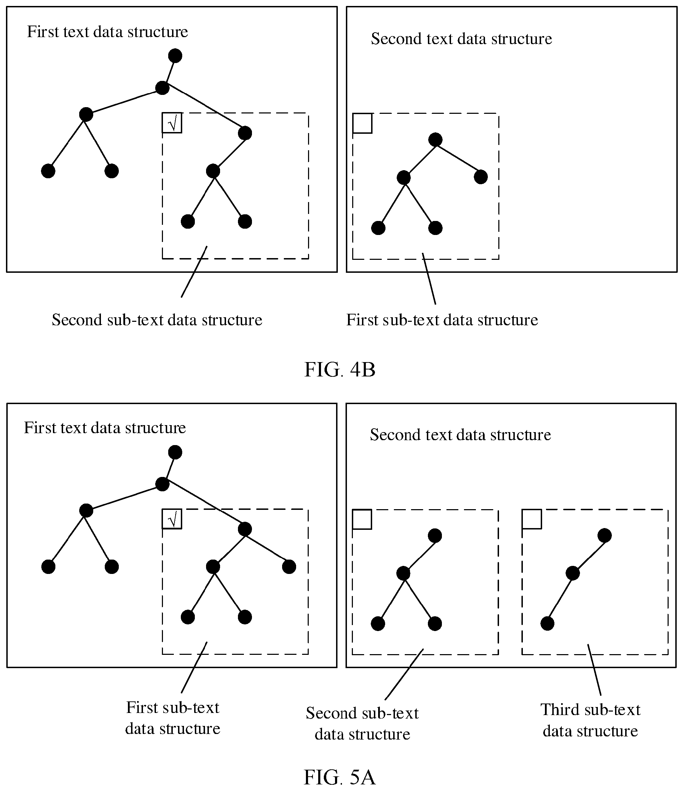

For example, corresponding to a case shown in FIG. 3A in which the first code block is displayed in the first editing area and the second code block is displayed in the second editing area, refer to FIG. 4A. Before S202 is performed, the first text data structure includes the first sub-text data structure that indicates the first code block, and the second text data structure includes the second sub-text data structure that indicates the second code block. Refer to FIG. 4B. After S202 is performed, an updated first text data structure does not include the first sub-text data structure, but includes the second sub-text data structure. Correspondingly, in S202, the editing system may further update the second text data structure based on the first operation instruction. Therefore, in FIG. 4B, an updated second text data structure includes the first sub-text data structure, but does not include the second sub-text data structure.

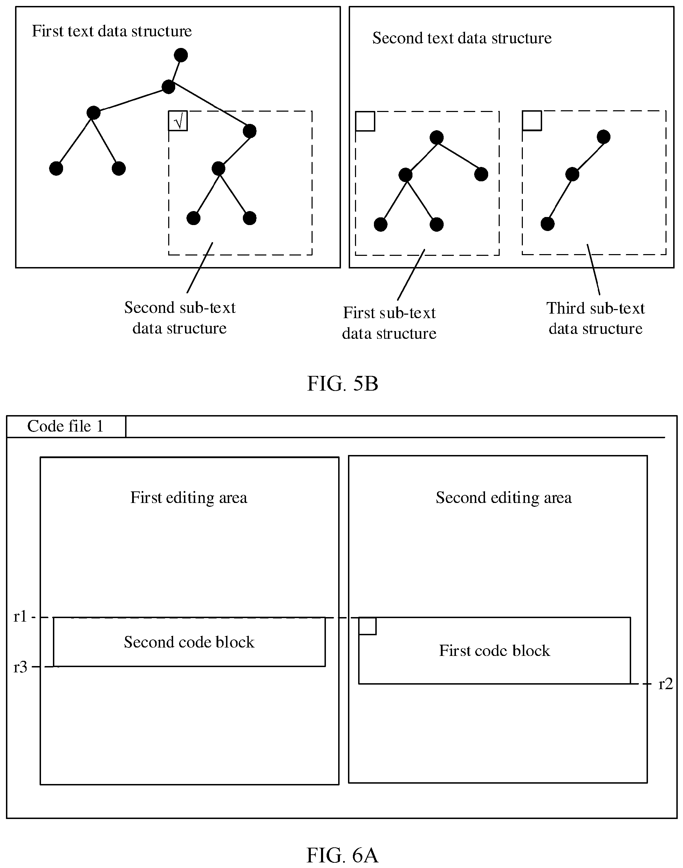

For another example, corresponding to a case shown in FIG. 3B in which the first code block is displayed in the first editing area and the second code block is displayed in the second editing area, the drop-down option box on the second code block includes the identification information of the plurality of alternative code blocks of the first code block. For example, the plurality of alternative code blocks include the second code block and the third code block. Refer to FIG. 5A. Before S202 is performed, the first text data structure includes the first sub-text data structure that indicates the first code block, and the second text data structure includes the second sub-text data structure that indicates the second code block and the third sub-text data structure that indicates the third code block. There is no connection relationship between the second sub-text data structure and the third sub-text data structure. Refer to FIG. 5B. After S202 is performed, an updated first text data structure does not include the first sub-text data structure, but includes the second sub-text data structure. Correspondingly, in S202, the editing system may further update the second text data structure based on the first operation instruction. Therefore, in FIG. 5B, an updated second text data structure includes the first sub-text data structure and the third sub-text data structure, but does not include the second sub-text data structure.

For still another example, corresponding to a case shown in FIG. 3C in which the first code block is displayed in the first editing area, the first drop-down option box includes the numbers of all alternative code blocks of the first code block. For example, the alternative code blocks of the first code block include the second code block and the third code block. Refer to FIG. 5A. Before S202 is performed, the first text data structure includes the first sub-text data structure that indicates the first code block, and the second text data structure includes the second sub-text data structure that indicates the second code block and the third sub-text data structure that indicates the third code block. There is no connection relationship between the second sub-text data structure and the third sub-text data structure. Refer to FIG. 5B. After S202 is performed, an updated first text data structure does not include the first sub-text data structure, but includes the second sub-text data structure. Correspondingly, in S202, the editing system may further update the second text data structure based on the first operation instruction. Therefore, in FIG. 5B, an updated second text data structure includes the first sub-text data structure and the third sub-text data structure, but does not include the second sub-text data structure.

Optionally, the solution in step S202 may be executed by a processing unit in the editing system, that is, the processing unit may update, based on the first operation instruction, the first text data structure corresponding to the first editing area. For a manner of updating the first text data structure by the processing unit, refer to the foregoing content for understanding. Details are not described in this embodiment of this application.

S203: The editing system displays the second code block in the first editing area based on an updated first text data structure.

S203 may be understood as a processing feedback of the editing system on the operation of the user. Optionally, step S203 may be performed by the processing unit in the editing system, that is, the processing unit may display the second code block in the first editing area based on the updated first text data structure.

After S201 to S203, a position at which the first code block is originally displayed in the first editing area is changed to display the second code block. It may be understood that, after S201 to S203, the text code in the first editing area is changed. For example, text code in the first editing area before S201 is denoted as a first set of text code, and text code in the first editing area after S201 to S203 are performed is denoted as a second set of text code. A difference between the first set of text code and the second set of text code lies in that the first set of text code includes the first code block but does not include the second code block, and the second set of text code includes the second code block but does not include the first code block.

For example, based on FIG. 3A, a result shown in FIG. 6A may be obtained by performing S202 and S203. That is, in response to an operation that the user selects the optional box of the second code block shown in FIG. 3A, a processing result shown in FIG. 6A is obtained by performing S202 and S203. The processing result is that the second code block is displayed at a position at which the first code block is originally located in the first editing area, and correspondingly, the first code block is displayed at a position at which the second code block is originally located in the second editing area. It may be understood that positions of the first code block and the second code block are exchanged.

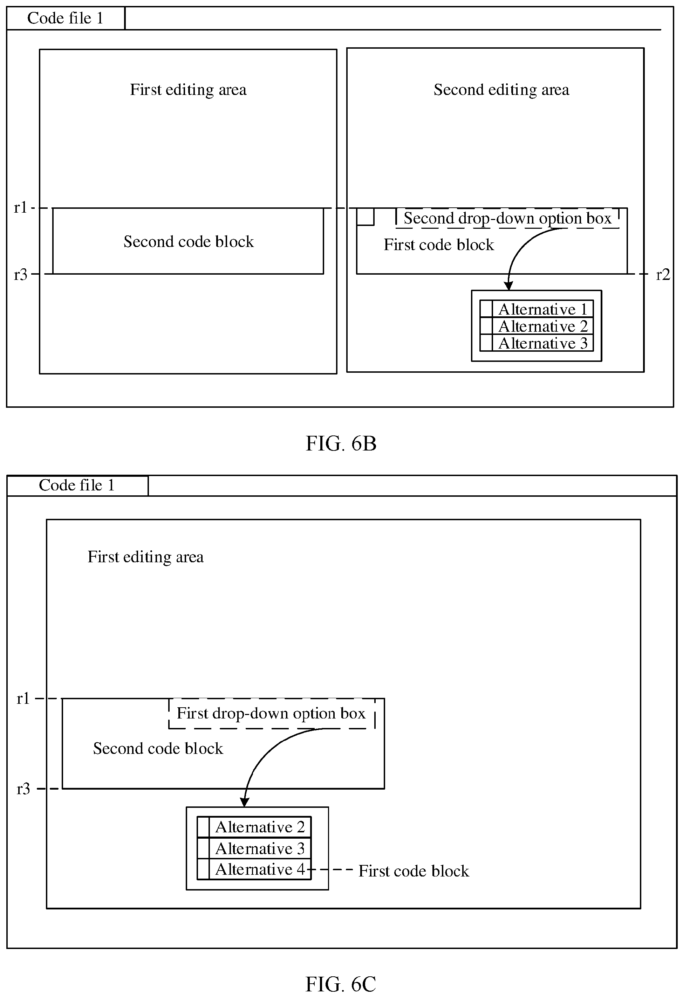

For example, based on FIG. 3B, a result shown in FIG. 6B may be obtained by performing S202 and S203. That is, in response to an operation that the user selects the optional box of the second code block shown in FIG. 3A, a processing result shown in FIG. 6B is obtained by performing S202 and S203. The processing result is that the second code block is displayed at a position at which the first code block is originally located in the first editing area, and correspondingly, the first code block is displayed at a position at which the second code block is originally located in the second editing area. It may be understood that positions of the first code block and the second code block are exchanged. After S202 and S203 are performed, the second drop-down option box in FIG. 6B is located at the position at which the second code block is originally located in the second editing area. This may alternatively be described as: After S202 and S203 are performed, the second drop-down option box in FIG. 6B is located at a position at which the first code block is located in the second editing area.

For example, based on FIG. 3C, a result shown in FIG. 6C may be obtained by performing S202 and S203. That is, in response to an operation that the user selects alternative 1 in the first drop-down option box shown in FIG. 3C, an alternative code block indicated by alternative 1 is considered as the second code block. A processing result shown in FIG. 6C is obtained by performing S202 and S203. The processing result is that the second code block is displayed at a position at which the first code block is originally located in the first editing area, and the first drop-down option box includes a number (for example, alternative 4) of the first code block, but does not include a number (for example, alternative 1) of the second code block. That is, it may be understood that, after S202 and S203, the first code block may be considered as an alternative code block of the second code block, and the first code block may be recorded in the first drop-down option box with a number (for example, alternative 4).

**In** this embodiment of this application, for a set of runnable text code, the editing system may store and display alternative code blocks of some or all code blocks in the set of text code, and may establish a mapping relationship between a code block and a corresponding alternative code block based on a text data structure. Setting an alternative code block is equivalent to providing a plurality of sets of text code. For example, if the user (for example, a software developer) needs to replace or optimize a software function, the user may use an alternative code block to replace an original code block. This is equivalent to using one set of text code to replace another set of text code, so that optimization, modification, upgrading, or the like of the software function may be implemented, and editing efficiency can be effectively improved.

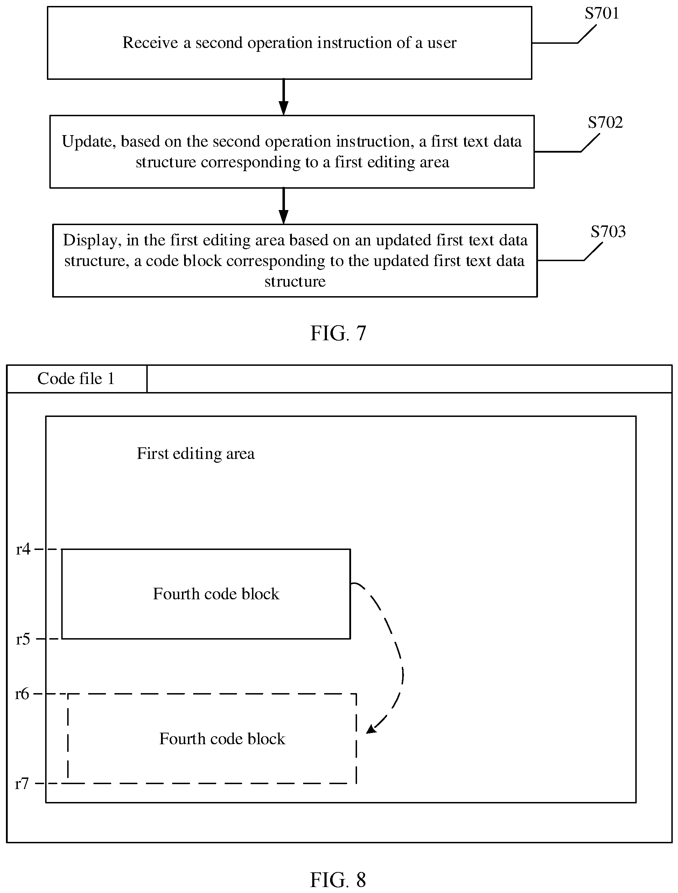

**In** addition, based on division into code blocks in a code file, the editing system may further support the user in performing other editing operations on a code block in the first editing area, for example, editing operations such as adding, deleting, copying, pasting, and moving, in addition to switching to an alternative code block, so that editing efficiency of text code in the first editing area can be improved. Refer to FIG. 7. An editing method is described, and the method may be used to edit a code block.

S701: The editing system receives a second operation instruction of the user.

The second operation instruction indicates one or more of the following: deleting a specified code block in the first editing area, copying a specified code block in the first editing area, pasting a copied code block to a specified position in the first editing area, moving a specified code block in the first editing area to a specified position in the first editing area, or adding a code block in the first editing area.

It may be understood that the specified code block may include one or more code blocks in the first editing area that are indicated by the user by using the second operation instruction. The specified position may be a position that is in the first editing area and that is indicated by the user by using the second operation instruction. When the user edits text code of a newly added code block in the first editing area, the editing system may receive a second operation instruction that instructs to add a code block in the first editing area, where the second operation instruction carries the newly added code block, and the newly added code block includes one or more lines of text code.

For example, the second operation instruction of the user instructs to move a specified code block in the first editing area to a specified position in the first editing area. Refer to FIG. 8. The specified code block is a fourth code block in the first editing area, and the fourth code block includes text code in an r4^{th} line to an r5^{th} line in the first editing area. When the user moves the fourth code block in the first editing area to a position starting from an r6^{th} line, it is equivalent to entering the second operation instruction, and the editing system may receive the second operation instruction entered by the user. That is, the second operation instruction instructs to move the fourth code block to a specified position in the first editing area, and the specified position includes a plurality of lines starting from the r6^{th} line and ending at an r7^{th} line. A difference between r7 and r6 is equal to a difference between r5 and r4. In a manner of division into code blocks, text code in a code file may be grouped, and one code block is used as a whole. In such a design, the user may directly perform an editing operation on the whole code block, with no need to first select text code that needs to be moved and then move the text code, so that editing efficiency and user experience can be improved.

Optionally, step S701 may be performed by the user interaction unit in the editing system, and the user interaction unit receives the second operation instruction of the user. For example, the user interaction unit provides a text code editor for the user, and when the user triggers, in the text code editor, an editing operation of a specified code block, the user interaction unit receives the second operation instruction of the user.

S702: The editing system updates, based on the second operation instruction, a first text data structure corresponding to the first editing area.

For a definition of the first text data structure, refer to the description in S202 for understanding. Details are not described in this embodiment of this application.

The editing system may determine, based on the second operation instruction, an editing requirement of the user for a code block in the first editing area, and then modify, based on the editing requirement of the user, a sub-text data structure in the first text data structure corresponding to the first editing area.

For example, the second operation instruction instructs to delete a specified code block in the first editing area. In this case, the editing system may determine that the user expects to delete the specified code block from the first editing. Further, the editing system may delete, from the first text data structure, a sub-text data structure corresponding to the specified code block.

For example, the second operation instruction instructs to copy a specified code block in the first editing area, and paste the copied code block to a specified position in the first editing area. In this case, the editing system may determine that the user expects to copy and paste the specified code block in the first editing area, and indicates the specified position for pasting. For example, the user expects to copy and paste the fourth code block in the first editing area to a position after a fifth code block in the first editing area. The editing system may determine, in the first text data structure, a fourth sub-text data structure corresponding to the fourth code block and a fifth sub-text data structure corresponding to the fifth code block. Further, based on specific code execution logic, for example, first executing the fifth code block and then executing the copied and pasted fourth code block, the editing system may retain the original fourth sub-text data structure in the first text data structure, and insert the fourth sub-text data structure after a leaf node of the fifth sub-text data structure.

For example, the second operation instruction instructs to move a specified code block in the first editing area to a specified position in the first editing area. In this case, the editing system may determine that the user expects to move the specified code block in the first editing area, and indicates the specified position (or referred to as a target position) for moving. Further, the editing system may delete, from the first text data structure, a sub-text data structure corresponding to the specified code block. For example, the user expects to move the fourth code block in the first editing area to a position after a fifth code block in the first editing area. The editing system may determine, in the first text data structure, a fourth sub-text data structure corresponding to the fourth code block and a fifth sub-text data structure corresponding to the fifth code block. Further, based on specific code execution logic, for example, first executing the fifth code block and then executing the copied and pasted fourth code block, the editing system may move and insert the original fourth sub-text data structure in the first text data structure after a leaf node of the fifth sub-text data structure.

For another example, the second operation instruction instructs to add a code block in the first editing area, and the user enters text code of a new code block in the first editing area. In this case, the editing system may obtain, by using the first editing area of the user, the text code of the new code block entered by the user and an input position. Further, the editing system may add a node corresponding to the new code block to the first text data structure based on specific code execution logic.

Optionally, the solution in step S702 may be executed by the processing unit in the editing system, that is, the processing unit may update, based on the second operation instruction, the first text data structure corresponding to the first editing area. For a manner of updating the first text data structure by the processing unit, refer to the foregoing content for understanding. Details are not described in this embodiment of this application.

S703: The editing system displays, in the first editing area based on an updated first text data structure, a code block corresponding to the updated first text data structure.

S703 may be understood as a processing feedback of the editing system on the operation of the user. Optionally, step S703 may be performed by the processing unit in the editing system, that is, the processing unit may display, in the first editing area based on the updated first text data structure, the code block corresponding to the updated first text data structure.

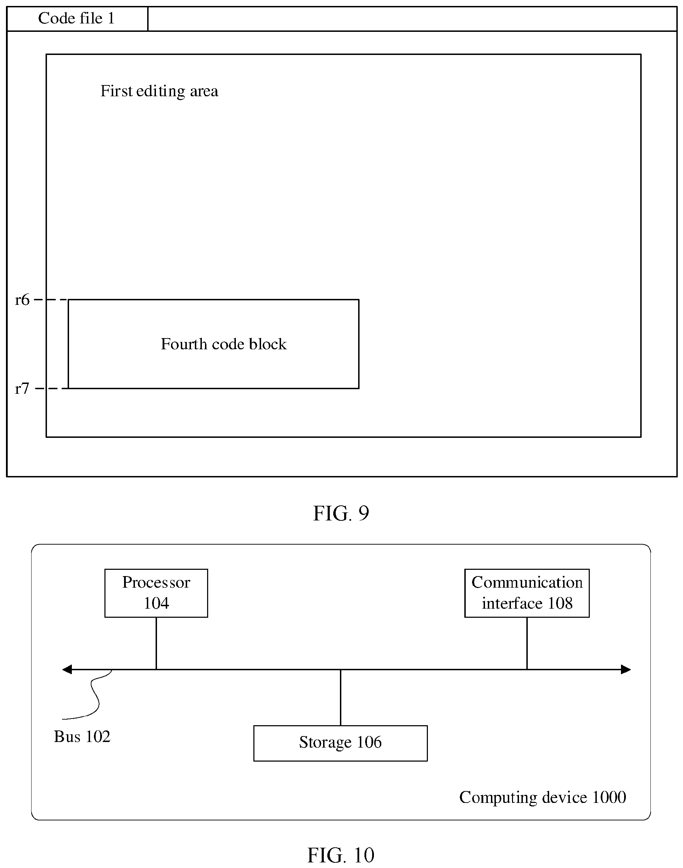

For example, based on FIG. 8, a result shown in FIG. 9 may be obtained by performing S702 and S703. That is, in response to a movement operation performed by the user on the fourth code block shown in FIG. 8, a processing result shown in FIG. 9 is obtained by performing S702 and S703. The processing result is that the fourth code block is displayed at a position from the r6^{th} line to the r7^{th} line in the first editing area.

Optionally, the embodiment shown in FIG. 7 and the embodiment shown in FIG. 2 may be applied in combination. For example, the user may perform, based on the manner provided in the embodiment shown in FIG. 7, an editing operation on some or all code blocks in the first editing area described in the embodiment shown in FIG. 2. Alternatively, the embodiment shown in FIG. 7 and the embodiment shown in FIG. 2 may not be combined, but are separately applied. This is not limited in this embodiment of this application, and an execution sequence of the two embodiments in FIG. 2 and FIG. 7 is not limited.

Based on the foregoing embodiments, an embodiment of this application further provides a computing device 1000. As shown in FIG. 10, the computing device 1000 includes a bus 102, a processor 104, a storage 106, and a communication interface 108. The processor 104, the storage 106, and the communication interface 108 communicate with each other through the bus 102. The computing device 1000 may be a notebook computer, a desktop computer, a server, or a terminal device. It should be understood that quantities of processors and storages in the computing device 1000 are not limited in this application.

The bus 102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by using only one line in FIG. 10. However, it does not indicate that there is only one bus or only one type of bus. The bus 104 may include a path for transmitting information between components (for example, the storage 106, the processor 104, and the communication interface 108) of the computing device 1000.

The processor 104 may include any one or more of processors, such as a central processing unit (central processing unit, CPU), a graphics processing unit (graphics processing unit, GPU), a microprocessor (microprocessor, MP), or a digital signal processor (digital signal processor, DSP).

The storage 106 may include a volatile memory (volatile memory), for example, a memory such as a random access memory (random access memory, RAM). The storage 106 may further include a non-volatile memory (non-volatile memory), for example, a read-only memory (read-only memory, ROM), a flash memory, a hard disk drive (hard disk drive, HDD), or a solid-state drive (solid-state drive, SSD). The storage is any other medium that can carry or store expected program code in a form of an instruction or a data structure and that can be accessed by a computer, but is not limited thereto. The storage in this embodiment of this application may alternatively be a circuit or any other apparatus that can implement a storage function, and is configured to store program instructions and/or data.

For example, the storage 106 stores executable program code, and the processor 104 executes the executable program code to separately implement functions of the user interaction unit and the processing unit, thereby implementing the text code editing method. That is, the storage 106 stores instructions that are used by the text code editing system to perform the text code editing method. The storage 106 further stores a code file and a text data structure corresponding to the code file.

The communication interface 108 uses a transceiver module, for example, but not limited to, a network interface card or a transceiver, to implement communication between the computing device 1000 and another device or a communication network. When the computing device 1000 is a chip-type apparatus or circuit, the communication interface 108 in the computing device 1000 may alternatively be an input/output circuit, and may input information (or referred to as receiving information) and output information (or referred to as sending information). The processor is an integrated processor, a microprocessor, an integrated circuit, or a logic circuit, and the processor may determine output information based on input information.

The coupling in this embodiment of this application may be an indirect coupling or a communication connection between apparatuses, units, or modules in an electrical form, a mechanical form, or another form, and is used for information exchange between the apparatuses, the units, or the modules. The processor 104 may operate cooperatively with the storage 106 and the communication interface 108. A specific connection medium between the processor 104, the storage 106, and the communication interface 108 is not limited in this embodiment of this application.

An embodiment of this application further provides a computer program product including instructions. The computer program product may be a software or program product that includes instructions and that can be run on a computing device or stored in any usable medium. When the computer program product is run on a computing device cluster, the computing device cluster is enabled to perform the foregoing text code editing method that is applied to the text code editing system, or the computing device cluster is enabled to perform the foregoing text code editing method that is applied to the text code editing system.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct a computing device cluster to perform the foregoing text code editing method that is applied to the text code editing system, or instruct a computing device cluster to perform the foregoing text code editing method that is applied to the text code editing system.

In embodiments of this application, on the premise that there is no logical conflict, examples may be mutually referenced. For example, methods and/or terms in the method embodiments may be mutually referenced. For example, functions and/or terms in the system embodiments may be mutually referenced. For example, functions and/or terms in the system examples and the method examples may be mutually referenced.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A text code editing method, comprising:
receiving a first operation instruction of a user, wherein the first operation instruction instructs to replace a first code block in the first editing area with a second code block, and the second code block is one of alternative code blocks used to replace the first code block;
updating, based on the first operation instruction, a first text data structure corresponding to the first editing area, wherein an updated first text data structure does not comprise a first sub-text data structure that indicates the first code block, and the updated first text data structure comprises a second sub-text data structure that indicates the second code block; and
displaying the second code block in the first editing area based on the updated first text data structure.

2. The method according to claim 1, wherein before the first operation instruction of the user is obtained, the second code block is displayed in a second editing area; and the method further comprises:
displaying the first code block in the second editing area based on the updated first text data structure.

3. The method according to claim 2, wherein
before the first text data structure corresponding to the first editing area is updated, a second text data structure corresponding to the second editing area comprises the second sub-text data structure and does not comprise the first sub-text data structure; and
after the first text data structure corresponding to the first editing area is updated, the second text data structure corresponding to the second editing area comprises the first sub-text data structure and does not comprise the second sub-text data structure.

4. The method according to any one of claims 1 to 3, wherein there is a mapping relationship between the first sub-text data structure and a text data structure that indicates an alternative code block of the first code block; and the updating, based on the first operation instruction, a first text data structure corresponding to the first editing area comprises:
determining the first sub-text data structure and the second sub-text data structure based on the first operation instruction; and
replacing the first sub-text data structure in the first text data structure with the second sub-text data structure based on a mapping relationship between the first sub-text data structure and the second sub-text data structure.

5. The method according to any one of claims 1 to 4, further comprising:
receiving a second operation instruction of the user, wherein the second operation instruction indicates one or more of the following: deleting a specified code block in the first editing area, copying a specified code block in the first editing area, pasting a copied code block to a specified position in the first editing area, moving a specified code block in the first editing area to a specified position in the first editing area, or adding a code block in the first editing area;
updating the first text data structure based on the second operation instruction; and
displaying, in the first editing area based on the first text data structure, a code block corresponding to an updated first text data structure.

6. The method according to any one of claims 1 to 5, wherein before the first operation instruction of the user is obtained, the method further comprises:
determining a code block in the first editing area based on the first text data structure of the first editing area.

7. A text code editing system, comprising:
a user interaction unit, configured to receive a first operation instruction of a user, wherein the first operation instruction instructs to replace a first code block in the first editing area with a second code block, and the second code block is one of alternative code blocks used to replace the first code block; and
a processing unit, configured to update, based on the first operation instruction, a first text data structure corresponding to the first editing area, wherein an updated first text data structure does not comprise a first sub-text data structure that indicates the first code block, and the updated first text data structure comprises a second sub-text data structure that indicates the second code block, wherein
the processing unit is further configured to display the second code block in the first editing area based on the updated first text data structure.

8. The system according to claim 7, wherein before the user interaction unit receives the first operation instruction of the user, the second code block is displayed in a second editing area; and the processing unit is further configured to display the first code block in the second editing area based on the updated first text data structure.

9. The system according to claim 8, wherein before the processing unit updates the first text data structure corresponding to the first editing area, a second text data structure corresponding to the second editing area comprises the second sub-text data structure and does not comprise the first sub-text data structure; and after the processing unit updates the first text data structure corresponding to the first editing area, the second text data structure corresponding to the second editing area comprises the first sub-text data structure and does not comprise the second sub-text data structure.

10. The system according to any one of claims 8 to 9, wherein there is a mapping relationship between the first sub-text data structure and a text data structure that indicates an alternative code block of the first code block; and the processing unit is specifically configured to:
determine the first sub-text data structure and the second sub-text data structure based on the first operation instruction; and
replace the first sub-text data structure in the first text data structure with the second sub-text data structure based on a mapping relationship between the first sub-text data structure and the second sub-text data structure.

11. The system according to any one of claims 8 to 10, wherein
the user interaction unit is further configured to receive a second operation instruction of the user, wherein the second operation instruction indicates one or more of the following: deleting a specified code block in the first editing area, copying a specified code block in the first editing area, pasting a copied code block to a specified position in the first editing area, moving a specified code block in the first editing area to a specified position in the first editing area, or adding a code block in the first editing area;
the processing unit is further configured to update the first text data structure based on the second operation instruction; and
the processing unit is further configured to display, in the first editing area, a code block corresponding to an updated first text data structure.

12. The system according to any one of claims 8 to 11, wherein before the user interaction unit receives the first operation instruction of the user, the processing unit is further configured to determine a code block in the first editing area based on the first text data structure of the first editing area.

13. A computing device, wherein the computing device comprises a processor and a storage, wherein
the storage is configured to store computer-executable instructions; and
the processor is configured to execute the computer-executable instructions stored in the storage, so that the computing device performs the method according to any one of claims 1 to 6.

14. A computer-readable storage medium, wherein the computer-readable storage medium comprises computer program instructions, and when the computer program instructions are run by a computer device, the computer device is enabled to perform the method according to any one of claims 1 to 6.

15. A computer program product, wherein the computer program product comprises instructions, and when the instructions are run by a computer device, the computer device is enabled to perform the method according to any one of claims 1 to 6.
